# EUROPÄISCHE PATENTSCHRIFT

(11) **EP 4 094 060 B1**
(45) Veröffentlichungstag und Bekanntmachung des Hinweises auf die Patenterteilung: **21.05.2025**
(21) Anmeldenummer: 21701119.6
(22) Anmeldetag: 19.01.2021
(51) Int. Cl.: G01M 7/02, G01M 7/04

(54) **MECHANISCHE PRÜFVORRICHTUNG UND VERFAHREN ZUM PRÜFEN VON BALKENFÖRMIGEN PRÜFLINGEN, INSBESONDERE ROTORBLÄTTERN VON WINDENERGIEANLAGEN**
MECHANICAL TEST DEVICE AND METHOD FOR TESTING BAR-SHAPED TEST OBJECTS, IN PARTICULAR ROTOR BLADES OF WIND TURBINES
DISPOSITIF D'ESSAI MÉCANIQUE ET PROCÉDÉ POUR TESTER DES OBJETS À TESTER EN FORME DE POUTRE, EN PARTICULIER DES PALES DE ROTOR D'ÉOLIENNES

(30) Priorität: 23.01.2020 DE 102020200822
(43) Veröffentlichungstag der Anmeldung: 30.11.2022
(73) Patentinhaber: Fraunhofer-Gesellschaft zur Förderung der angewandten Forschung e.V., 80686 München (DE)
(72) Erfinder: ROSEMEIER, Malo, 27572 Bremerhaven (DE); BASTERS, Gregor, 27572 Bremerhaven (DE)
(74) Vertreter: Pfenning, Meinig & Partner mbB
(86) Internationale Anmeldenummer: PCT/EP2021/051081
(87) Internationale Veröffentlichungsnummer: WO 2021/148413

(56) Entgegenhaltungen:
- CN-U- 204 594 684
- DE-A1- 102008 048 131
- US-A1- 2019 094 104

## Beschreibung

Die Erfindung liegt auf dem Gebiet der Mechanik und des Maschinenbaus und ist mit besonderem Vorteil bei der Prüfung von Rotoren von Windenergieanlagen einsetzbar.

Konkret betrifft die Erfindung eine Prüfeinrichtung und ein Verfahren zum Prüfen von balkenförmigen Prüflingen, beispielsweise Rotorblättern oder Rotorblattabschnitten von Windenergieanlagen.

Derartige Rotorblätter sind im Betrieb starken und lange anhaltenden Belastungen ausgesetzt. Es sollen dabei möglichst hohe Standzeiten von Windenergieanlagen erreicht werden, wobei ein Bruch durch Materialermüdung möglichst sicher ausgeschlossen werden muss.

Um die Lebensdauer von Rotoren voraussagen oder durch Konstruktionsmaßnahmen optimieren zu können, sind mechanische Belastungsprüfungen notwendig, die unter reproduzierbaren und möglichst genau definierbaren Bedingungen eine zyklische Belastung von Rotorblättern ermöglichen.

Zu diesem Zweck werden Prüfeinrichtungen eingesetzt, die automatisch über längere Zeit betreibbar sind.

Derartige Prüfeinrichtungen müssen eine Lagerung oder Halterung oder auch eine Einspannung von Rotorblättern ermöglichen und zudem die Möglichkeit einer zyklischen mechanischen Lasteinleitung in einer oder mehreren Richtungen durch aktive Lasteinleitungsmittel bieten. Zudem können passive Lasteinleitungsmittel vorgesehen sein, die beispielsweise zur Einstellung von Systemeigenfrequenzen dienen können.

Verschiedene Prüffälle erfordern dabei eine Krafteinleitung derart, dass der Prüfling bestimmte Freiheitsgrade behält.

Aus der europäischen Patentanmeldung EP3433594 A1 ist eine Prüfvorrichtung bekannt, bei der ein Prüfling in Lastrahmen eingespannt wird, die jeweils um eine Achse rotieren /schwenken können. Allerdings ist bei dem bekannten System bereits eine Drehung des gesamten Prüflings um seine Längsachse, um sowohl in Schlag- als auch in Schwenkrichtung eines Rotorblattes belasten zu können, höchst aufwendig und erfordert größere Umbauten.

Weiterhin ist eine mechanische Prüfungseinrichtung aus US2019/094104 A1 bekannt.

Der vorliegenden Erfindung liegt vor dem Hintergrund des Standes der Technik die Aufgabe zu Grunde, eine Prüfeinrichtung und ein Prüfverfahren zu schaffen, die das Einstellen von unterschiedlichen Prüfbedingungen in möglichst großem Umfang und auf möglichst einfache Weise gestatten.

Die Aufgabe wird gemäß der Erfindung mit den Merkmalen des Patentanspruchs 1 durch eine Prüfeinrichtung gelöst. Die vom Anspruch 1 abhängigen Unteransprüche stellen mögliche Implementierungen von Prüfeinrichtungen vor.

Die Erfindung bezieht sich zudem auf Prüfverfahren mit den Merkmalen der unabhängigen Patentansprüche 9 und 10 sowie Implementierungen solcher Verfahren.

Durch die Symmetrie des Lastrahmens ist es in einfacher Weise möglich, den Prüfling insgesamt um seine Längsachse jeweils um 90 Grad um andere Winkelbeträge zu drehen. Dadurch können mithilfe von aktiven Lasteinleitungsmitteln Belastungen, insbesondere zyklische Belastungen, aus verschiedenen Richtungen auf einen Prüfling angewendet werden. Beispielsweise ist mit minimalen Umbauten eine Belastungsprüfung mit einer Belastung in Schwenkrichtung eines Rotorblattes und danach eine Belastungsprüfung mit einer Belastung in Schlagrichtung möglich, wobei dieselben aktiven Lasteinleitungsmittel verwendet werden können. Auch Drehungen des Prüflings um andere Winkelbeträge als 90 Grad sind grundsätzlich möglich. Dabei ist eine solche Drehbarkeit grundsätzlich dadurch gegeben, dass das Rahmenteil als ganzes drehbar ist und in verschiedenen Winkelpositionen, insbesondere jeweils um 90 Grad gegeneinander versetzt, in einem Tragrahmen oder einem Stützrahmen drehbar gelagert werden kann.

Die Erfindung bezieht sich zudem auch auf eine Prüfeinrichtung, bei der die Klemmeinrichtung in dem Rahmenteil in mehreren Positionen, insbesondere mittels einer Spanneinrichtung, befestigbar ist, die jeweils um die Längsachse des eingeklemmten Prüflings zueinander verdreht, insbesondere um 90 Grad verdreht, sind.

Somit kann alternativ oder zusätzlich zu der Montierbarkeit des Lastrahmens in mehreren Winkelpositionen auch die Klemmeinrichtung innerhalb des Rahmenteils des Lastrahmens um die Längsachse des Prüflings um jeweils 90 Grad oder, im Fall eines kreisringförmigen Rahmenteils, um andere Winkelbeträge drehbar und fixierbar sein. Zur Fixierung der Klemmeinrichtung in dem Rahmenteil ist eine Spanneinrichtung am Rahmenteil vorgesehen, die eine Einspannung der Klemmeinrichtung in dem Rahmenteil ermöglicht. Die Klemmeinrichtung kann ihrerseits mehrere Klemmblöcke umfassen, zwischen denen ein Prüfling eingeklemmt werden kann, insbesondere im Zuge des Einklemmens der Klemmeinrichtung durch das Rahmenteil. Die Spanneinrichtung kann als Spannschelle oder auch als Schraubverbindung zwischen den Rahmenteilen gestaltet sein.

Wird der Prüfling nach einer Drehung um 90 Grad erneut geprüft, so können die vorhandenen aktiven und passiven Lasteinleitungselemente für die neue Prüfung wenigstens teilweise weiter genutzt werden, insbesondere, wenn Lasteinleitungselemente für die Lasteinleitung in wenigstens 2 aufeinander senkrecht stehenden Richtungen vorgesehen sind.

Weiter bezieht sich die Erfindung auf eine Prüfeinrichtung, bei der das Rahmenteil wenigstens zwei um 90 Grad an seinem Umfang versetzt angeordnete rahmenteilseitige Drehlagerteile oder Befestigungseinrichtungen für Drehlagerteile aufweist, die jeweils dazu eingerichtet sind, mit trägerrahmenseitigen Drehlagerteilen an einem Trägerrahmen oder Drehlagerteilen an einem Stützrahmen zusammenzuwirken.

Es kann auch vorgesehen sein, dass innerhalb der Klemmeinrichtung zwei Klemmblöcke vorgesehen sind, die zwischen sich für den Prüfling eine Durchgangsöffnung freilassen, deren Breite, senkrecht zur Längsachse eines eingeklemmten Prüflings gemessen, wenigstens zweimal, insbesondere wenigstens drei- oder fünfmal so groß ist wie ihre Höhe, wobei im Falle eines Prüflings in Form eines Rotorblattsegmentes die Breite der Durchgangsöffnung in Schwenkrichtung und die Höhe in Schlagrichtung gemessen wird.

Durch die derart beschriebene Formgebung der Klemmblöcke wird der Form eines Rotorblattes einer Windenergieanlage Rechnung getragen. Die Ausdehnung eines solchen Rotorblattes in Schwenkrichtung, die hier der Breite der Durchgangsöffnung entspricht, ist üblicherweise um ein Mehrfaches größer als die Ausdehnung eines Rotorblattes in Schlagrichtung an derselben Stelle in Bezug auf die Längsachse des Rotorblattes. Dennoch können die zu einer Einheit zusammengefügten Klemmblöcke der Klemmeinrichtung, in Richtung der Längsachse des eingeklemmten Prüflings gesehen, gemäß der Erfindung eine kreisrunde oder quadratische Außenkontur haben.

Eine weitere Implementierung kann vorsehen, dass das Rahmenteil in einer ersten Drehlageranordnung in einem Trägerrahmen um die erste Querachse drehbar gelagert ist, wobei der Trägerrahmen dieselbe Rotationssymmetrie aufweist wie das Rahmenteil und der Trägerrahmen in einer zweiten Drehlageranordnung an einem Stützrahmen um eine zweite Querachse des in dem Lastrahmen eingeklemmten Prüflings drehbar gelagert ist, die senkrecht zur Längsachse und insbesondere geneigt gegenüber der ersten Querachse, weiter insbesondere senkrecht zur ersten Querachse des Prüflings verläuft.

Durch eine derartige Anordnung werden zweiachsige Prüfungen ermöglicht, die eine Drehbarkeit des Prüflings an einem Lagerpunkt, insbesondere an einem Lastrahmen um mehrere Achsen erfordern.

Es kann zudem vorgesehen sein, dass der Stützrahmen um eine zur Längsachse des Prüflings senkrechte und von diesem beabstandete Schwenkachse schwenkbar gelagert ist.

Durch die beschriebene Schwenkbarkeit des Stützrahmens ist eine Bewegungsmöglichkeit des Prüflings mit dem Lastrahmen in Richtung der Längsachse des Prüflings gegeben. Dies ist ein Freiheitsgrad, der sowohl für einachsige Prüfungen als auch für zweiachsige Prüfungen sinnvoll oder notwendig sein kann.

Eine weitere Implementierung kann vorsehen, dass das Rahmenteil in der ersten Drehlageranordnung in einem Stützrahmen um die erste Querachse drehbar gelagert ist und der Stützrahmen um eine zur Längsachse des Prüflings senkrechte und von diesem beabstandete Schwenkachse schwenkbar gelagert ist.

Damit ist die Bewegungsmöglichkeit des Prüflings mit dem Lastrahmen in Richtung der Längsachse des Prüflings für den Fall gegeben, dass der Lastrahmen, beispielsweise für einachsige Prüfungen, unmittelbar in einem stützrahmen gelagert ist.

Die Erfindung kann sich zudem auch darauf beziehen, dass innerhalb einer Prüfeinrichtung wenigstens ein aktives oder passives Lasteinleitungsmittel vorgesehen ist, das einen Lastrahmen zur Verbindung mit einem Prüfling aufweist oder an einem solchen Lastrahmen angreift, wobei der Lastrahmen, wie bereits oben ausführlich beschrieben, ein Rahmenteil und eine in diesem gehaltene Klemmeinrichtung aufweist, in der ein balkenförmiger Prüfling, insbesondere ein Rotorblatt oder Rotorblattsegment, durch den Lastrahmen hindurchragend einklemmbar ist, und wobei das Rahmenteil eine vierzählige Rotationssymmetrie, insbesondere eine quadratische Form, oder eine Kreisringform aufweist.

Damit kann eine Drehbarkeit der Lastrahmen um die Längsachse des Prüflings bei jedem oder allen verwendeten Lastrahmen, die der Ankopplung des Prüflings an aktive oder passive Lasteinleitungsmittel dienen, ermöglicht werden.

Grundsätzlich ist zu den obigen Beschreibungen zu ergänzen, dass die Prüfeinrichtung in allen Fällen eine Einrichtung zur einseitigen Lagerung oder Einspannung eines Prüflings, beispielsweise eines Rotorblattes aufweisen kann.

Die Erfindung bezieht sich außer auf eine Prüfeinrichtung der oben genannten Art zudem auf ein Verfahren zur Durchführung einer einachsigen oder zweiachsigen Prüfung eines Prüflings in Form eines Rotorblatts oder Rotorblattsegments einer Windenergieanlage mit einer Prüfeinrichtung der oben beschriebenen Art, bei dem zunächst Klemmblöcke in Abhängigkeit von der zu prüfenden Achse des Prüflings innerhalb des Rahmenteils eines Lastrahmens in die gewünschte Position innerhalb des Rahmenteils gedreht und dann mit dem Prüfling festgeklemmt werden und dass danach nach einem vorgegebenen Prüfschema eine Last in den Prüfling eingebracht wird.

Auf diese Weise kann der Prüfling für eine gewünschte Prüfung in vielen Fällen ohne eine Drehung des Rahmenteils des Tragrahmens in die gewünschte Winkelposition um seine Längsachse gedreht werden. Es kann jedoch auch eine Kombination einer Drehung der Klemmböcke innerhalb des Tragrahmens und des Tragrahmens selbst um die Längsachse vorgesehen sein.

Die Erfindung bezieht sich zudem auf ein Verfahren zur Durchführung einer zweiachsigen Prüfung eines Prüflings in Form eines Rotorblatts oder Rotorblattsegments einer Windenergieanlage mit einer Prüfeinrichtung gemäß der oben beschriebenen Art, bei dem zunächst durch Drehen von Klemmblöcken innerhalb eines Lastrahmens und/oder durch Verdrehen des Lastrahmens in einem Trägerrahmen zwei Belastungsrichtungen festgelegt und darauf durch Einstellen von einem oder mehreren passiven Lasteinleitungselementen, von denen wenigstens eines nur in einer oder parallel zu einer der Belastungsrichtungen wirkt, die geeigneten Belastungsfrequenzen in den beiden Belastungsrichtungen in einem gewünschten Verhältnis zueinander derart eingestellt werden dass eine der beiden geeigneten Belastungsfrequenzen ein ganzzahliges Vielfaches der anderen geeigneten Belastungsfrequenz ist, wobei die geeigneten Belastungsfrequenzen insbesondere jeweils Systemeigenfrequenzen des Prüflings für eine Schwingung in der jeweiligen Belastungsrichtung sind.

Durch die Drehbarkeit des Prüflings um seine Längsachse können Belastungsrichtungen ebenso wie die Wirkrichtungen der passiven Lasteinleitungsmittel frei eingestellt werden. Ein Rotorblatt kann so beispielsweise nicht nur bei Belastung in Schlagrichtung und Schwenkrichtung, sondern auch in dazwischen liegenden Richtungen auf einfache Weise geprüft werden.

Im Folgenden wird die Erfindung anhand von Ausführungsbeispielen und Beispielen in in Figuren einer Zeichnung gezeigt und anschließend beschrieben.

Dabei zeigt:
Figur 1 und Figur 2 jeweils eine Prüfeinrichtung in einer Seitenansicht mit einem einseitig gelagerten Prüfling,
Figur 3 einen an einem Stützrahmen drehbar gelagerten Lastrahmen, der nicht in den Schutzbereich der Ansprüche fällt,
Figur 4 einen Lastrahmen mit vierzähliger Symmetrie, gemäß der beanspruchten Erfindung
Figur 5 einen kreisrunden, ringförmigen Lastrahmen, der nicht in den Schutzbereich der Ansprüche fällt,
Figur 6 einen Lastrahmen, der drehbar in einem Trägerrahmen gelagert ist, wobei der Trägerrahmen drehbar in einem Stützrahmen gelagert ist, der nicht in den Schutzbereich der Ansprüche fällt,
Figur 7 einen Lastrahmen sowie einen Trägerrahmen wie in Figur 6 dargestellt in vergrößerter Form, der nicht in den Schutzbereich der Ansprüche fällt,
Figur 8 einen kreisrunden Lastrahmen, der in einem ebenfalls kreisrunden Trägerrahmen gelagert ist, der nicht in den Schutzbereich der Ansprüche fällt,
Figur 9 sowie Figur 10 einen um eine Achse drehbaren Lastrahmen an einem drehbar gelagerten Ende eines Prüflings, der nicht in den Schutzbereich der Ansprüche fällt,
Figuren 11, 12 jeweils einen um zwei Achsen drehbaren Lastrahmen, in dem ein Prüfling an einem seiner Enden gelagert ist, der nicht in den Schutzbereich der Ansprüche fällt, sowie
Figur 13 schematisch in einer Seitenansicht eine Prüfeinrichtung, bei der ein Prüfling einseitig in einer Haltevorrichtung fest eingespannt ist.

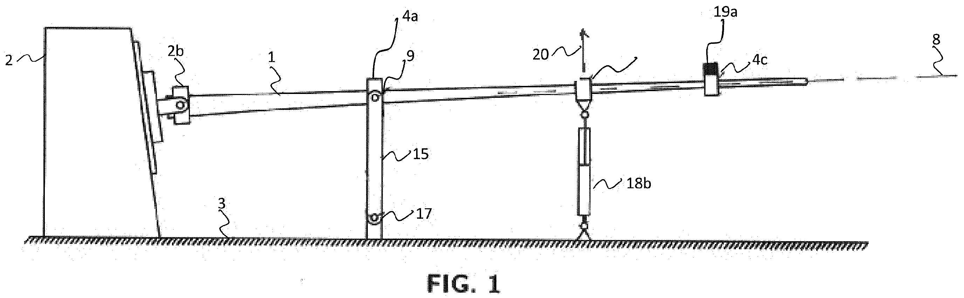

Figur 1 zeigt in einer Seitenansicht einen Prüfling 1 in Form eines Rotorblatts einer Windenergieanlage, der einseitig an einer Haltevorrichtung 2 in einer Lagereinrichtung 2b schwenkbar gelagert ist. Innerhalb der Lagereinrichtung 2b kann der Prüfling in einen Lastrahmen gemäß der Erfindung eingeklemmt sein.

Der Prüfling 1 ist zu dem mittels eines Lastrahmens 4a an einem Stützrahmen 15 drehbar um eine Querachse 9 gelagert. Der Stützrahmen ist seinerseits fundamentseitig um eine Schwenkachse 17 drehbar gelagert. Die Achsen 9, 17 stehen senkrecht zur Zeichenebene.

Mittels des Stützrahmens 15 ist der Prüfling gegenüber dem Fundament 3 abgestützt.

In einem weiteren Lastrahmen 4b ist der Prüfling 1 eingeklemmt und an den Lastrahmen 4b greift ein aktives Lasteinleitungsmittel 18b an. Mittels des aktiven Lasteinleitungsmittels 18b, das beispielsweise als elektromagnetisch, hydraulisch oder pneumatisch angetriebener Aktuator ausgestaltet sein kann, kann eine Last in Richtung des Pfeils 20 auf den Prüfling aufgebracht werden. Im Rahmen einer Belastungsprüfung kann diese Last zyklisch verändert werden, sodass sie beispielsweise periodisch in Form einer sinusförmigen oder sägezahn- oder rechteckförmigen Belastung einwirkt.

Es ist an dem Prüfling 1 zusätzlich ein Lastrahmen 4c angeordnet, mittels dessen ein passives Lasteinleitungsmittel 19a in Form einer auf dem Prüfling befestigten Masse angekoppelt ist. Durch die Größe der Masse und ihrer Position längs der Längsachse 8 des Prüflings kann die Systemeigenfrequenz des Prüflings bei Schwingungen in Richtung des Pfeils 20 passend eingestellt werden.

Die Lastrahmen 4a, 4b, 4c und auf dem Rahmen der Lagerung 2b eingesetzte Lastrahmen können jeweils einzeln oder in Gruppen oder auch allesamt als erfindungsgemäße Lastrahmen mit einer vierzähligen Symmetrie, die als quadratische Lastrahmen ausgebildet sein.

Dadurch kann der Prüfling 1 beispielsweise um seine Längsachse 8 in einfacher Weise um 90 Grad gedreht und darauf mittels derselben Lasteinleitungsmittel 18b geprüft werden. Auf diese Weise sind zumindest mehrere unabhängige einachsige Prüfungen mit geringem Aufwand durchzuführen.

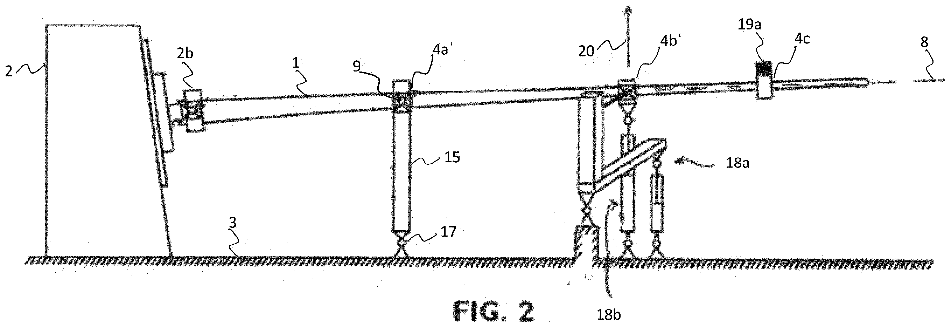

In der Figur 2 ist eine Prüfeinrichtung ähnlich der in der Figur 1 dargestellten Prüfeinrichtung gezeigt, wobei jedoch die aktiven Lasteinleitungsmittel 18a, 18b derart ausgestaltet sind, dass jedes von ihnen in einer anderen Belastungsrichtung wirkt. Es ist ein erstes aktives Lasteinleitungsmittel 18a vorgesehen, mittels dessen eine veränderliche Last auf den Prüfling 1 in Richtung senkrecht zur Zeichenebene erzeugt werden kann. Zudem ist ein zweites aktives Lasteinleitungsmittel 18b dargestellt, mittels dessen auf dem Prüfling eine Last in Richtung des Pfeils 20, das heißt in der Zeichenebene aufgebracht werden kann.

Der Prüfling 1 ist wie bei der in der Figur 1 dargestellten Variante an einer Haltevorrichtung 2 mittels einer Lagereinrichtung 2b schwenkbar gelagert und in einem Stützrahmen 15 mittels eines Lastrahmens 4a' gehalten. Es sind auch ähnliche Anwendungen denkbar, bei denen der Prüfling an einem Ende in der Haltevorrichtung eingespannt ist.

Auch die aktiven Lasteinleitungsmittel 18a, 18b können an dem Prüfling mittels eines Lastrahmens 4b' angreifen. Die Lastrahmen 4a', 4b' sind jeweils drehbar um eine erste Querachse in einem Trägerrahmen gelagert, der seinerseits jeweils drehbar um eine zweite Querachse gelagert ist. Jeder der Lastrahmen 4a' 4b' ist mit vierzähliger Rotationssymmetrie, quadratisch ausgestaltet. Auf diese Weise ist der Prüfling 1 bei Aufbringen von Querkräften jeweils um mehrere Achsen drehbar, sodass auch zweiachsige Prüfungen ohne Schwierigkeiten durchgeführt werden können. Der Prüfling kann in den jeweiligen Lastrahmen mittels einer Klemmeinrichtung mit wenigstens zwei Klemmblöcken befestigt sein, wobei auch die Klemmeinrichtung in dem Lastrahmen drehbar ist, sodass der Prüfling auch ohne eine Drehung der Rahmenteile um seine Längsachse drehbar ist, um geeignete Prüfungsbedingungen einzustellen.

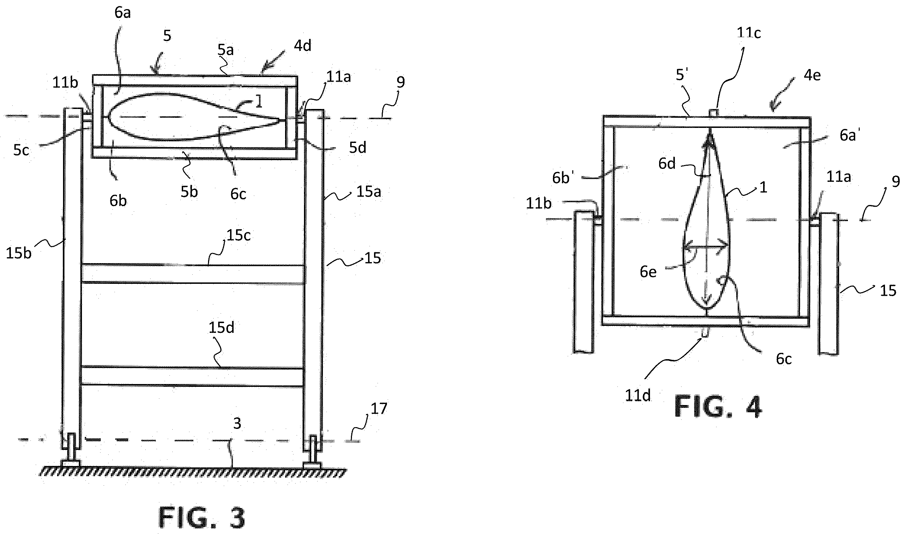

Die Figur 3 zeigt in einer Blickrichtung entlang der Längsachse 8 eines Prüflings den Prüfling 1 im Querschnitt sowie eine Sicht auf einem Stützrahmen 15, der an einem Fundament 3 um eine Schwenkachse 17 schwenkbar befestigt ist.

Der Stützrahmen 15 weist zwei Längsholme 15a, 15b sowie Querholme 15c, 15d auf sowie stützrahmenseitige Drehlagerelemente, die sich mit rahmenteilseitigen Drehlagerteilen 11a, 11b zu Drehlagern ergänzen. Hierdurch ist ein Lastrahmen 4d um die erste Querachse 9 gegenüber dem Stützrahmen 15 drehbar.

Der Lastrahmen 4d ist rechteckig ausgebildet und weist ein rechteckiges Rahmenteil 5 mit den Rahmenteilelementen 5a, 5b, 5c, 5d auf. In dem Rahmenteil 5 sind zwei Klemmblöcke 6a, 6b einer Klemmeinrichtung eingespannt. Diese weisen zwischen sich eine Durchgangsöffnung 6c für den Prüfling 1 auf. Die Elemente 5a, 5b, 5c, 5d des Rahmenteils 5 können durch Befestigungsmittel wie beispielsweise Schrauben oder Schellen miteinander verspannbar sein, um zwischen sich die Klemmblöcke 6a, 6b und den Prüfling 1 einzuklemmen.

In der Figur 4 ist in einer Ansicht entlang der Längsachse 8 des Prüflings ein Lastrahmen 4e dargestellt, der eine vierzählige Symmetrie um die Längsachse 8 des Prüflings 1 aufweist. Der Lastrahmen 4e ist in seiner Kontur quadratisch ausgebildet. Die Längsseiten des Rahmenteils 5 sind in diesem Fall gleich lang. Die Klemmblöcke 6a' und 6b' bilden somit eine Klemmeinrichtung, die ebenfalls eine quadratische Außenkontur hat und gegenüber dem Rahmenteil 5 in 90°-Schritten verdreht werden kann. Somit kann der Prüfling 1 auch in 90° gegeneinander verdrehten Positionen in dem Rahmenteil 5 befestigt werden.

In der Figur 4 ist der Lastrahmen mittels Drehlagerteilen 11a, 11b um eine erste Querachse 9 gegenüber einem Stützrahmen 15 drehbar.

Das Rahmenteil 5' weist zusätzlich zu den symbolisch zapfenartig dargestellten Drehlagerteilen 11a, 11b um jeweils 90° versetzt noch Drehlagerteile 11c, 11d auf, sodass auch der Lastrahmen gegenüber dem Stützrahmen um 90° verdreht und gelagert werden kann.

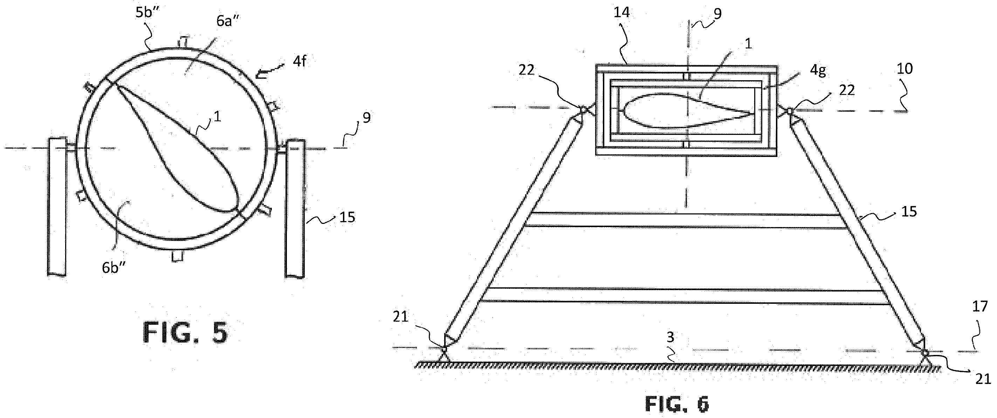

In der Figur 5 ist ein Prüfling 1 dargestellt, der zwischen zwei Klemmblöcken 6a", 6b" eingeklemmt ist, die zusammen eine kreisrunde Kontur bilden. Die Klemmeinrichtung 6a", 6b" ist insgesamt in einem kreisringförmigen Rahmenteil 5" eingeklemmt. Das Rahmenteil 5" ist zu diesem Zweck in zwei halbkreisförmige Ringteile geteilt, die miteinander mittels Schellen oder Schrauben verspannbar sind, um zwischen sich die kreisrunde Klemmeinrichtung einzuklemmen. Das Rahmenteil 5" ist in einer Stützeinrichtung 15 um eine erste Querachse 9 drehbar gelagert. Am Umfang des Rahmenteils 5" sind symbolisch weitere Drehlagerteile dargestellt.

Alternativ kann ein kreisringförmiger Rahmen als Großlager, insbesondere als Kugel oder Kegellager ausgebildet sein. Darin lässt sich die Klemmeinrichtung zusammen mit dem Prüfling im eingeklemmten Zustand leicht verdrehen. Dadurch kann der Prüfling zusätzlich torsionsfrei gelagert werden. Sind beide Rahmen 2b und 4a als Großlager ausgebildet, so kann an einem der Rahmen das Großlager arretiert werden damit zumindest an einem Rahmen die Torsion aufgenommen werden kann.

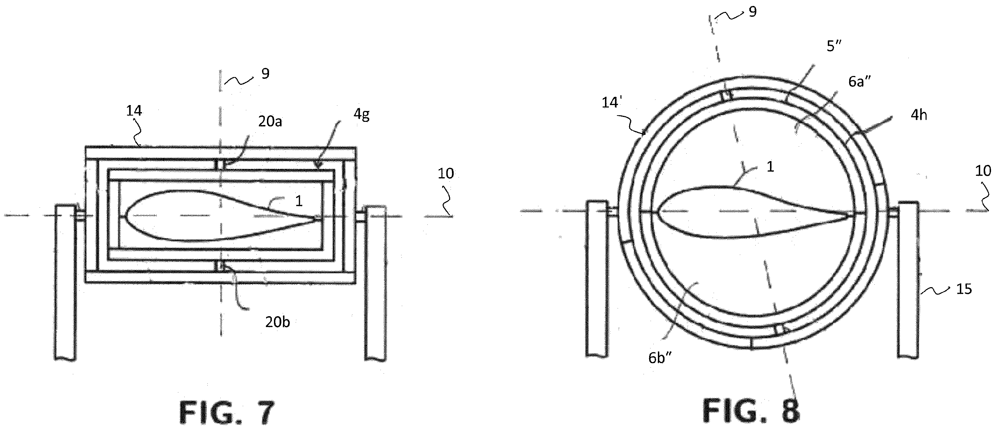

Äquivalentes gilt für die Rahmen der zweiachsigen Prüfung in Fig. 8; darin wird entweder der Trägerrahmen oder vorzugsweise der Lastrahmen als Großlager ausgeführt und optional arretiert.

Die Figur 6 zeigt einen Lastrahmen 4g, der rechteckig ausgestaltet ist und eine rechteckige Klemmeinrichtung aufweist. Das rechteckige Rahmenteil des Lastrahmens 4g ist um eine erste Querachse 9 gegenüber einem Trägerrahmen 14 drehbar gelagert. Der Trägerrahmen 14 weist eine entsprechend rechteckige Form auf und ist seinerseits um eine zweite Querachse 10 an einem Stützrahmen 15 drehbar gelagert. Insgesamt lässt sich somit eine kardanische Aufhängung des Lastrahmens 4g in dem Stützrahmen 15 erreichen. Der Stützrahmen 15 ist zudem um eine Schwenkachse 17 schwenkbar an dem Fundament 3 gelagert. Weiterhin ist der Stützrahmen 15 im Vergleich zu Fig. 3 angewinkelt, sodass an den Auflagern 21 auch Querkräfte parallel zur Schwenkachse 17 aufgenommen werden können. Die Auflager 22 der Achse 10 sowie die Auflager 21 sind bspw. als Kugelgelenke ausgeführt. Die Querachsen 9, 10 stehen in dem dargestellten Beispiel senkrecht aufeinander. Eine solche senkrechte Anordnung der Schwenkachsen ist beispielsweise bei kreisringförmigen Rahmenteilen beziehungsweise Lastrahmen nicht zwingend notwendig, wie weiter unten anhand der Figur 8 gezeigt wird.

In der Figur 7 ist die Konfiguration mit einem rechteckigen Lastrahmen 4g, der in einem ebenfalls rechteckigen Trägerrahmen 14 drehbar gelagert ist, nochmals in vergrößerter Form detailliert dargestellt.

Gemäß der beanspruchten Erfindung ist der Lastrahmen 4g quadratisch ausgestaltet und somit mit einer vierzähligen Symmetrie der Trägerrahmen 14, so dass sich der Lastrahmen 4g innerhalb des Trägerrahmens 14 jeweils in 90°-Schritten drehen lässt. An dem Lastrahmen 4g und/oder an dem Trägerrahmen 14 können entsprechende rahmenteilseitige Drehlagerteile und trägerrahmenseitige Drehlagerteile vorgesehen sein, sodass jeweils in den um 90° gegeneinander um die Längsachse des Prüflings gedrehten Positionen Drehlager gebildet werden.

Auch der Trägerrahmen kann gegenüber dem Stützrahmen um die Längsachse des Prüflings drehbar sein, im Fall eines quadratischen Trägerrahmens in 90°-Schritten.

In der Figur 8 ist ein kreisringförmiger Lastrahmen 4h gezeigt, der ein Rahmenteil aus zwei halbkreisförmigen Ringsegmenten aufweist, die gegeneinander verspannt sind und eine kreisförmige Klemmeinrichtung 6a", 6b" einklemmen. Die Klemmeinrichtung 6a", 6b" ist einerseits gegenüber dem Rahmenteil des Lastrahmens 4h stufenlos um die Längsachse des Prüflings 1 drehbar und einklemmbar. Andererseits kann auch das kreisringförmige Rahmenteil in verschiedenen Drehpositionen gegenüber dem Trägerrahmen 14' drehbar gelagert oder lagerbar sein. Zu diesem Zweck können an dem Rahmenteil in verschiedenen Position rahmenteilseitige Drehlagerteile angeordnet sein, die jeweils mit trägerrahmenseitigen Drehlagerteilen zusammenwirken und Drehlager bilden können. Andererseits können auch einfach Befestigungseinrichtungen für Drehlagerteile am Umfang des Rahmenteils des Lastrahmens 4h vorgesehen sein, beispielsweise in Form von Bohrungen, in die Drehlagerteile einsteckbar sind, um den Lastrahmen 4h in verschiedenen Drehpositionen gegenüber dem Trägerrahmen 14' zu positionieren und in jeweils in einem Drehlager zu lagern.

Der Trägerrahmen 14' ist mittels Drehlagern um die zweite Querachse 10 gegenüber einem Stützrahmen 15 gelagert. In der Figur 8 ist ersichtlich, dass die erste Querachse 9, um die der Lastrahmen 4h drehbar ist, gegenüber der zweiten Querachse 10, um die der Trägerrahmen 14' drehbar gelagert ist, um einen Winkel geneigt ist, der ungleich 90° ist. Es kann jedoch zwischen den beiden Querachsen 9, 10 auch ein Winkel von 90° vorgesehen sein.

Auch der Trägerrahmen 14' kann eine Mehrzahl von Drehlagerteilen aufweisen, um in mehreren Winkelpositionen an dem Stützrahmen drehbar lagerbar zu sein, die gegeneinander um die Längsachse des Prüflings 1 gedreht sind.

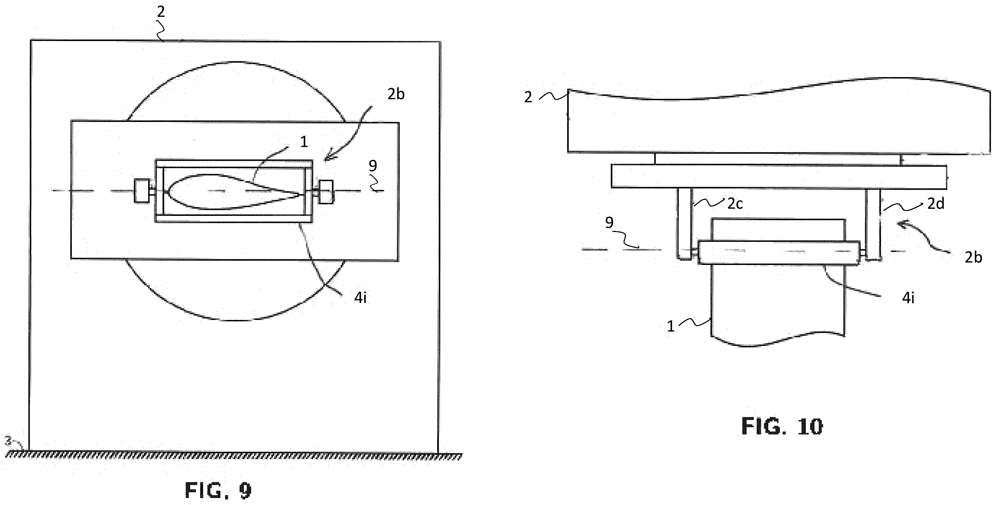

Die Figur 9 zeigt in einer Sicht auf die Haltevorrichtung 2 in Längsrichtung 8 des Prüflings gesehen einen Lastrahmen 4i, in den ein Prüfling eingespannt ist, wobei der Lastrahmen 4i um eine horizontal angeordnete erste Querachse 9 drehbar gelagert ist. Die Lagerung des Lastrahmens 4i sieht Drehlager vor, die an Halterarmen 2c, 2d der Lagereinrichtung 2b angeordnet sind. Die Position der Drehlager ist in der Draufsicht der Figur 10 zu erkennen. Wird anstelle des rechteckigen Lastrahmens 4i ein quadratischer Lastrahmen gemäß der Erfindung gewählt, so kann sowohl die Klemmvorrichtung innerhalb des Rahmenteils als auch das Rahmenteil selbst in einfacher Weise um 90° um die Längsachse gedreht und in der Lagereinrichtung 2b, 2c, 2d gelagert werden.

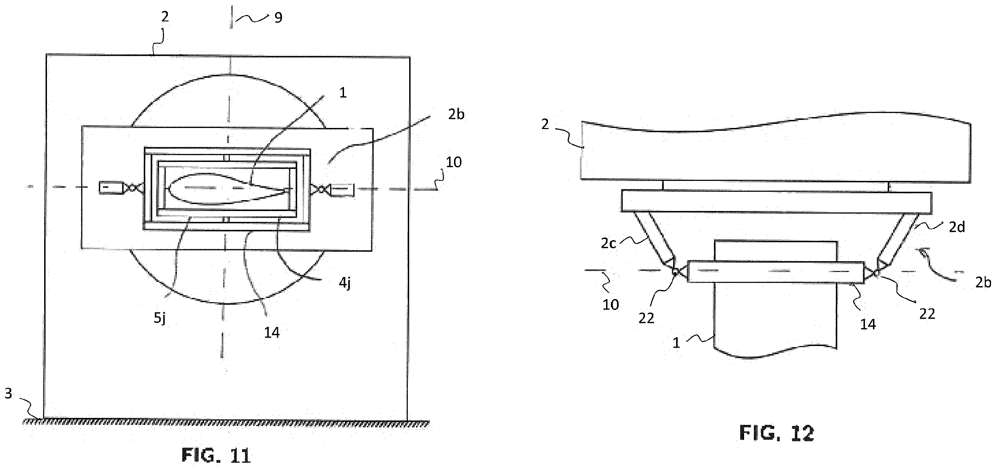

Die Figur 11 zeigt in einer Draufsicht analog zur Figur 9 in einer Draufsicht einen Lastrahmen 4j, der rechteckig ausgestaltet ist und in den ein Prüfling 1 eingeklemmt ist. Der Lastrahmen 4j weist ein rechteckiges Rahmenteil 5j auf, das um eine vertikale erste Querachse 9 in Drehlagern innerhalb eines Trägerrahmens 14 drehbar gelagert ist. Der Trägerrahmen 14 ist ebenso rechteckig ausgestaltet und mittels Drehlagern um eine horizontale zweite Querachse 10 an angewinkelten Armen 2c, 2d der Lagereinrichtung 2b drehbar gelagert, wie aus der Figur 12 in einer Draufsicht von oben ersichtlich ist. Die Auflager sind dabei kugelgelagert und können dadurch auch Querkräfte aufnehmen.

Somit ergibt sich eine kardanische Aufhängung/Lagerung des Prüflings 1 an der Haltevorrichtung 2, die dem Prüfling die Freiheitsgrade verleiht, die beispielsweise für eine zweiachsige Prüfung notwendig sind. Wird der Lastrahmen 4j und ebenso der Trägerrahmen 14 quadratisch oder kreisrund gestaltet, wie in den Figuren 4 und 8 gezeigt, so kann auch der Lastrahmen 4j innerhalb des Trägerrahmens 14 jeweils um 90° oder im Falle einer kreisringförmigen Gestaltung in beliebigen Winkelschritten um die Längsachse des Prüflings gedreht werden.

Zusätzlich ergibt sich die Möglichkeit, auch die Klemmblöcke innerhalb des Lastrahmens 4j im Falle der erfindungsgemäßen quadratischen Gestaltung in 90°-Schritten und im Falle einer kreisringförmigen Gestaltung des Lastrahmens in beliebigen oder auch voreingestellten diskreten Winkelschritten zu ändern. Damit vereinfachen sich die Möglichkeiten für eine Drehung des Prüflings 1 um seine Längsachse, um Belastungsrichtungen bei der Prüfung wunschgemäß einzustellen.

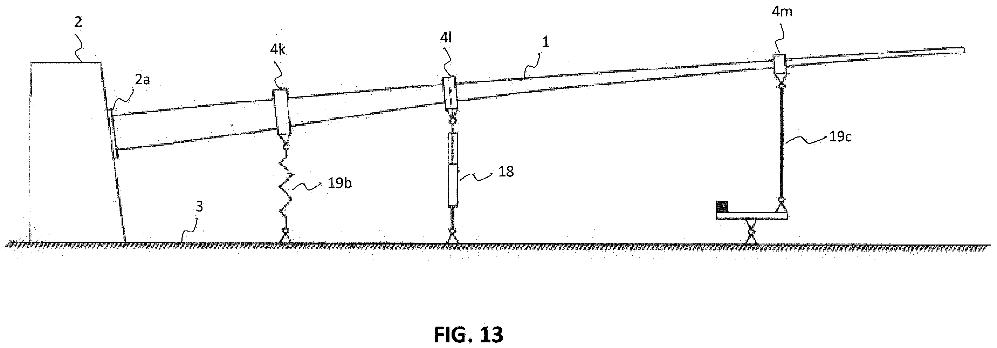

In der Figur 13 ist ein Prüfling 1 in einer Prüfeinrichtung dargestellt, in der der Prüfling in Form eines Rotorblattes einseitig an einer Haltevorrichtung 2 in einer Einspannvorrichtung 2a fest eingespannt ist, derart, dass er an diesem Ende keine Freiheitsgrade aufweist. Beispielhaft sind passive Lasteinleitungsmittel 19b, 19c sowie ein aktives Lasteinleitungsmittel 18 gezeigt, die jeweils an Lastrahmen 4k, 4l, 4m angreifen. Diese Lastrahmen können, wie in den obigen Beispielen dargestellt, erfindungsgemäß mit einer vierzähligen Symmetrie oder auch kreisringförmig ausgestaltet sein. Jeder einzelne der Lastrahmen 4k, 4l, 4m kann eine derartige Ausgestaltung aufweisen.

Damit ergeben sich mit den gezeigten verschiedenen Arten der einseitigen Halterung/Einspannung von Rotorblättern alle Kombinationsmöglichkeiten mit drehbaren Lastrahmen.

Zum Einstellen geeigneter Systemeigenfrequenzen des Prüflings während der Prüfung dienen die passiven Lasteinleitungsmittel 19a, 19b, 19c, die entweder als Federelemente zur Verbindung eines Lastrahmens mit einem ortsfesten Punkt oder als entkoppelte oder direkt angekoppelte Masse ausgebildet sein können. Dabei können einzelne, mehrere oder alle der passiven Lasteinleitungsmittel auch so gestaltet sein, dass sie auf den Prüfling nur in einer der Belastungsrichtungen wirken, sodass die Systemeigenfrequenzen des Prüflings in den vorgesehen Belastungsrichtungen einzeln einstellbar sind. Auch die aktiven Lasteinleitungsmittel 18a, 18b können bezüglich der Periodizität der Lasteinleitung separat voneinander eingestellt werden, sodass eine zyklische Anregung in den gewünschten Belastungsrichtungen jeweils bei den Systemeigenfrequenzen oder in unmittelbarer Nähe der Systemeigenfrequenzen des Prüflings gewählt werden kann. Gemäß der Erfindung sind die Prüfungsbedingungen durch die verschiedenen Optionen zur Drehbarkeit des Prüflings gut und einfach einstellbar und bei der Durchführung der Prüfung kann vorgesehen sein, dass die Belastungsfrequenz in einer der gewünschten Belastungsrichtungen jeweils ein ganzzahliges Vielfaches der Belastungsfrequenz in der zweiten gewünschten Belastungsrichtung ist.

## Patentansprüche

1. Mechanische Prüfeinrichtung mit wenigstens einem Lastrahmen (4a, 4a', 4b, 4b', 4c, 4e, 4k, 4l, 4m), der ein Rahmenteil (5') und eine in diesem gehaltene Klemmeinrichtung (6a) aufweist, in der ein balkenförmiger Prüfling (1), insbesondere ein Rotorblatt oder Rotorblattsegment, durch den Lastrahmen hindurchragend einklemmbar ist, wobei der Lastrahmen in einer ersten Drehlageranordnung an einem Trägerrahmen (14, 14') oder einem Stützrahmen (15) um eine erste Querachse (9) des Prüflings, die senkrecht zu seiner durch die Klemmeinrichtung hindurchragenden Längsachse (8) verläuft, drehbar gelagert ist, **dadurch gekennzeichnet, dass** der Lastrahmen eine quadratische Form mit einer vierzähligen Rotationssymmetrie aufweist.

2. Prüfeinrichtung nach Anspruch 1, **dadurch gekennzeichnet, dass** die Klemmeinrichtung (6a) in dem Rahmenteil (5') in mehreren Positionen, insbesondere mittels einer Spanneinrichtung, befestigbar ist, die jeweils um die Längsachse (8) des eingeklemmten Prüflings (1) zueinander um 90 Grad verdreht sind.

3. Prüfeinrichtung nach Anspruch 1 oder 2, **dadurch gekennzeichnet, dass** das Rahmenteil (5') wenigstens zwei um 90 Grad an seinem Umfang versetzt angeordnete rahmenteilseitige Drehlagerteile oder Befestigungseinrichtungen für Drehlagerteile aufweist, die jeweils dazu eingerichtet sind, mit trägerrahmenseitigen Drehlagerteilen an einem Trägerrahmen (14, 14') oder Drehlagerteilen an einem Stützrahmen (15) zusammenzuwirken.

4. Prüfeinrichtung nach Anspruch 1, 2 oder 3, **dadurch gekennzeichnet, dass** innerhalb der Klemmeinrichtung (6a) zwei Klemmblöcke vorgesehen sind, die zwischen sich für den Prüfling (1) eine Durchgangsöffnung (6c) freilassen, deren Breite (6d), senkrecht zur Längsachse (8) eines eingeklemmten Prüflings gemessen, wenigstens zweimal, insbesondere wenigstens drei- oder fünfmal so groß ist wie ihre Höhe (6e), wobei im Falle eines Prüflings in Form eines Rotorblattsegmentes die Breite der Durchgangsöffnung in Schwenkrichtung und die Höhe in Schlagrichtung gemessen wird.

5. Prüfeinrichtung nach einem der Ansprüche 1 bis 4, bei der das Rahmenteil (5') in einer ersten Drehlageranordnung (20a, 20b) in einem Trägerrahmen um die erste Querachse (9) drehbar gelagert ist, **dadurch gekennzeichnet, dass** der Trägerrahmen (14, 14') dieselbe Rotationssymmetrie aufweist wie das Rahmenteil und der Trägerrahmen in einer zweiten Drehlageranordnung an einem Stützrahmen (15) um eine zweite Querachse (10) des in dem Lastrahmen (4a, 4a', 4b, 4b', 4c, 4e, 4k, 4l, 4m) eingeklemmten Prüflings drehbar gelagert ist, die senkrecht zur Längsachse und insbesondere geneigt gegenüber der ersten Querachse (9), weiter insbesondere senkrecht zur ersten Querachse des Prüflings verläuft.

6. Prüfeinrichtung nach Anspruch 5, **dadurch gekennzeichnet, dass** der Stützrahmen (15) um eine zur Längsachse (8) des Prüflings (1) senkrechte und von diesem beabstandete Schwenkachse (17) schwenkbar gelagert ist.

7. Prüfeinrichtung mit einem Lastrahmen nach einem der Ansprüche 1 bis 4, **dadurch gekennzeichnet, dass** das Rahmenteil (5') in der ersten Drehlageranordnung (11a, 11b) in einem Stützrahmen (15) um die erste Querachse (9) drehbar gelagert ist und der Stützrahmen um eine zur Längsachse des Prüflings senkrechte und von diesem beabstandete Schwenkachse (17) schwenkbar gelagert ist.

8. Prüfeinrichtung nach einem der Ansprüche 1 bis 7, **dadurch gekennzeichnet, dass** wenigstens ein aktives oder passives Lasteinleitungsmittel (19a, 19b, 19c) vorgesehen ist, das einen Lastrahmen (4a, 4a', 4b, 4b', 4c, 4e, 4k, 4l, 4m) zur Verbindung mit einem Prüfling (1) aufweist, wobei der Lastrahmen ein Rahmenteil (5') und eine in diesem gehaltene Klemmeinrichtung (6a) aufweist, in der ein balkenförmiger Prüfling, insbesondere ein Rotorblatt oder Rotorblattsegment, durch den Lastrahmen hindurchragend einklemmbar ist, und wobei das Rahmenteil eine vierzählige Rotationssymmetrie, insbesondere eine quadratische Form, oder eine Kreisringform aufweist.

9. Verfahren zur Durchführung einer einachsigen oder zweiachsigen Prüfung eines Prüflings in Form eines Rotorblatts oder Rotorblattsegments (1) einer Windenergieanlage mit einer Prüfeinrichtung gemäß einem der vorangehenden Ansprüche, **dadurch gekennzeichnet, dass** zunächst Klemmblöcke (6a) in Abhängigkeit von der zu prüfenden Achse des Prüflings (1) innerhalb des Rahmenteils (5') des Lastrahmens (4a, 4a', 4b, 4b', 4c, 4e, 4k, 4l, 4m) in die gewünschte Position innerhalb des Rahmenteils gedreht und dann mit dem Prüfling festgeklemmt werden und dass danach nach einem vorgegebenen Prüfschema eine Last in den Prüfling eingebracht wird.

10. Verfahren zur Durchführung einer zweiachsigen Prüfung eines Prüflings in Form eines Rotorblatts oder Rotorblattsegments (1) einer Windenergieanlage mit einer Prüfeinrichtung gemäß einem der vorangehenden Ansprüche, **dadurch gekennzeichnet, dass** zunächst durch Drehen von Klemmblöcken innerhalb des Lastrahmens (4a, 4a', 4b, 4b', 4c, 4e, 4k, 4l, 4m) und/oder durch Verdrehen des Lastrahmens in einem Trägerrahmen (14, 14') zwei Belastungsrichtungen (20) festgelegt und darauf durch Einstellen von einem oder mehreren passiven Lasteinleitungselementen (19a, 19b, 19c), von denen wenigstens eines nur in einer oder parallel zu einer der Belastungsrichtungen wirkt, die geeigneten Belastungsfrequenzen in den beiden Belastungsrichtungen in einem gewünschten Verhältnis zueinander derart eingestellt werden, dass eine der beiden geeigneten Belastungsfrequenzen identisch oder ein ganzzahliges Vielfaches der anderen geeigneten Belastungsfrequenz ist, wobei die geeigneten Belastungsfrequenzen insbesondere jeweils Systemeigenfrequenzen des Prüflings für eine Schwingung in der jeweiligen Belastungsrichtung sind.

## Claims

1. A mechanical test device with at least one load frame (4a, 4a', 4b, 4b', 4c, 4e, 4k, 4l, 4m) which has a frame part (5') and a clamping device (6a) held therein, in which a beam-shaped test specimen (1), in particular a rotor blade or rotor blade segment, can be clamped projecting through the load frame, wherein the load frame is mounted in a first pivot bearing arrangement on a carrier frame (14, 14') or a support frame (15) so as to be rotatable about a first transverse axis (9) of the test specimen, which extends perpendicularly to its longitudinal axis (8) projecting through the clamping device, **characterized in that** the load frame has a square shape with a four-fold rotational symmetry.

2. The test device according to claim 1, **characterized in that** the clamping device (6a) is fastenable in the frame part (5') in multiple positions, in particular by means of a tensioning device, each of said positions being rotated by 90 degrees relative to one another about the longitudinal axis (8) of the clamped test specimen (1).

3. The test device according to claim 1 or 2, **characterized in that** the frame part (5') has, arranged offset by 90 degrees on its periphery, at least two frame-part-side pivot bearing parts or fastening devices for pivot bearing parts, which are each configured to cooperate with carrier-frame-side pivot bearing parts on a carrier frame (14, 14') or pivot bearing parts on a support frame (15).

4. The test device according to claim 1, 2 or 3, **characterized in that** two clamping blocks are provided within the clamping device (6a) and leave free between them a through-opening (6c) for the test specimen (1), the width (6d) of said through-opening, measured perpendicular to the longitudinal axis (8) of a clamped test specimen, being at least twice, in particular at least three or five times, as great as its height (6e), wherein, in the case of a test specimen in the form of a rotor blade segment, the width of the through-opening is measured in the edgewise direction and the height is measured in the flapwise direction.

5. The test device according to any one of claims 1 to 4, in which in a first pivot bearing arrangement (20a, 20b) the frame part (5') is rotatably mounted in a carrier frame about the first transverse axis (9), **characterized in that** the carrier frame (14, 14') has the same rotational symmetry as the frame part and the carrier frame is rotatably mounted in a second pivot bearing arrangement on a support frame (15) about a second transverse axis (10) of the test specimen clamped in the load frame (4a, 4a', 4b, 4b', 4c, 4e, 4k, 4l, 4m), which axis extends perpendicularly to the longitudinal axis and in particular inclined with respect to the first transverse axis (9), more particularly perpendicularly to the first transverse axis of the test specimen.

6. The test device according to claim 5, **characterized in that** the support frame (15) is mounted pivotably about a pivot axis (17) perpendicular to the longitudinal axis (8) of the test specimen (1) and spaced apart therefrom.

7. The test device with a load frame according to any one of claims 1 to 4, **characterized in that** the frame part (5') in the first pivot bearing arrangement (11a, 11b) is mounted in a support frame (15) so as to be rotatable about the first transverse axis (9) and the support frame is mounted pivotably about a pivot axis (17) perpendicular to the longitudinal axis of the test specimen and spaced apart therefrom.

8. The test device according to any one of claims 1 to 7, **characterized in that** at least one active or passive load introduction means (19a, 19b, 19c) is provided, which has a load frame (4a, 4a', 4b, 4b', 4c, 4e, 4k, 4l, 4m) for connection to a test specimen (1), wherein the load frame has a frame part (5') and a clamping device held therein, in which a beam-shaped test specimen, in particular a rotor blade or rotor blade segment can be clamped projecting through the load frame, and wherein the frame part has a four-fold rotational symmetry, in particular a square shape, or a circular ring shape.

9. A method for carrying out a uniaxial or biaxial testing of a test specimen in the form of a rotor blade or rotor blade segment (1) of a wind turbine with a test device according to any one of the preceding claims, **characterized in that** firstly clamping blocks are rotated to the desired position within the frame part in dependence on the axis of the test specimen (1) to be tested within the frame part (5') of the load frame (4a, 4a', 4b, 4b', 4c, 4e, 4k, 4l, 4m), and are then clamped to the test specimen, and **in that** thereafter a load is introduced into the test specimen according to a predetermined test scheme.

10. A method for carrying out a biaxial testing of a test specimen in the form of a rotor blade or rotor blade segment (1) of a wind turbine with a test device according to any one of the preceding claims, **characterized in that** two loading directions (20) are firstly defined by rotating clamping blocks within the load frame (4a, 4a', 4b, 4b', 4c, 4e, 4k, 4l, 4m) and/or by rotating the load frame in a carrier frame (14, 14'), and then, by adjusting one or more passive load-introducing elements (19a, 19b, 19c), of which at least one acts only in one or parallel to one of the loading directions, the suitable loading frequencies in the two loading directions are set in a desired ratio to one another in such a way that one of the two suitable loading frequencies is identical to or an integer multiple of the other suitable loading frequency, wherein the suitable loading frequencies are in particular in each case system natural frequencies of the test specimen for an oscillation in the respective loading direction.

## Revendications

1. Dispositif d'essai mécanique comprenant au moins un cadre de charge (4a, 4a', 4b, 4b', 4c, 4e, 4k, 4l, 4m) qui présente une partie de cadre (5') et un dispositif de serrage (6a) qui est retenu dans ladite partie de cadre et au sein duquel un spécimen d'essai (1) en forme de poutre, en particulier une pale de rotor ou un segment de pale de rotor, peut être enserré de manière à dépasser du cadre de charge, dans lequel le cadre de charge est monté rotatif autour d'un premier axe transversal (9) du spécimen d'essai au sein d'un premier agencement de palier rotatif au niveau d'un cadre porteur (14, 14') ou d'un cadre de support (15), ledit axe transversal s'étendant perpendiculairement à l'axe longitudinal (8) du spécimen d'essai dépassant du dispositif de serrage, **caractérisé en ce que** le cadre de charge présente une forme carrée avec une symétrie de rotation quadruple.

2. Dispositif d'essai selon la revendication 1, **caractérisé en ce que** le dispositif de serrage (6a) peut être fixé, en particulier au moyen d'un dispositif de mise en tension, dans la partie de cadre (5') dans plusieurs positions qui sont respectivement tournées de 90 degrés l'une par rapport à l'autre autour de l'axe longitudinal (8) du spécimen d'essai (1) enserré.

3. Dispositif d'essai selon la revendication 1 ou 2, **caractérisé en ce que** la partie de cadre (5') présente au moins deux parties de palier rotatif ou au moins deux dispositifs de fixation destinés à des parties de palier rotatif, situé(e)s côté partie de cadre et agencé(e)s de manière décalée de 90 degrés sur le pourtour de ladite partie de cadre, et respectivement conçu(e)s pour coopérer avec des parties de palier rotatif situées côté cadre porteur au niveau d'un cadre porteur (14, 14') ou avec des parties de palier rotatif au niveau d'un cadre de support (15).

4. Dispositif d'essai selon la revendication 1, 2 ou 3, **caractérisé en ce que** deux blocs de serrage sont prévus à l'intérieur du dispositif de serrage (6a), lesquels laissent entre eux, pour le spécimen d'essai (1), une ouverture traversante (6c) dont la largeur (6d), mesurée perpendiculairement à l'axe longitudinal (8) d'un spécimen d'essai enserré, est au moins deux fois, en particulier au moins trois ou cinq fois, plus grande que sa hauteur (6e), dans lequel, dans le cas d'un spécimen d'essai sous la forme d'un segment de pale de rotor, la largeur de l'ouverture traversante est mesurée dans la direction de pivotement et la hauteur est mesurée dans la direction d'impact.

5. Dispositif d'essai selon l'une quelconque des revendications 1 à 4, dans lequel la partie de cadre (5') est montée rotative autour du premier axe transversal (9) au sein d'un premier agencement de palier rotatif (20a, 20b) dans un cadre porteur, **caractérisé en ce que** le cadre porteur (14, 14') présente la même symétrie de rotation que la partie de cadre et le cadre porteur est monté rotatif autour d'un deuxième axe transversal (10) du spécimen d'essai enserré dans le cadre de charge (4a, 4a', 4b, 4b', 4c, 4e, 4k, 4l, 4m) au sein d'un deuxième agencement de palier rotatif au niveau d'un cadre de support (15), ledit axe transversal s'étendant perpendiculairement à l'axe longitudinal et en particulier de manière inclinée par rapport au premier axe transversal (9), en particulier en outre perpendiculairement au premier axe transversal du spécimen d'essai.

6. Dispositif d'essai selon la revendication 5, **caractérisé en ce que** le cadre de support (15) est monté pivotant autour d'un axe de pivotement (17) qui est perpendiculaire à l'axe longitudinal (8) du spécimen d'essai (1) et qui se trouve à distance de celui-ci.

7. Dispositif d'essai comprenant un cadre de charge selon l'une quelconque des revendications 1 à 4, **caractérisé en ce que** la partie de cadre (5') est montée rotative autour du premier axe transversal (9) au sein du premier agencement de palier rotatif (11a, 11b) dans un cadre de support (15) et le cadre de support est monté pivotant autour d'un axe de pivotement (17) qui est perpendiculaire à l'axe longitudinal du spécimen d'essai et qui se trouve à distance de celui-ci.

8. Dispositif d'essai selon l'une quelconque des revendications 1 à 7, **caractérisé en ce qu'**au moins un moyen d'introduction de charge actif ou passif (19a, 19b, 19c) est prévu, lequel moyen d'introduction de charge présente un cadre de charge (4a, 4a', 4b, 4b', 4c, 4e, 4k, 4l, 4m) à relier au spécimen d'essai (1), dans lequel le cadre de charge présente une partie de cadre (5') et un dispositif de serrage retenu dans ladite partie de cadre et au sein duquel un spécimen d'essai en forme de poutre, en particulier une pale de rotor ou un segment de pale de rotor, peut être enserré de manière à dépasser du cadre de charge, et dans lequel la partie de cadre présente une symétrie de rotation quadruple, en particulier une forme carrée ou une forme d'anneau circulaire.

9. Procédé de mise en œuvre d'un essai monoaxial ou biaxial d'un spécimen d'essai sous la forme d'une pale de rotor ou d'un segment de pale de rotor (1) d'une éolienne avec un dispositif d'essai selon l'une quelconque des revendications précédentes, **caractérisé en ce que** des blocs de serrage sont d'abord tournés à l'intérieur de la partie de cadre dans la position souhaitée à l'intérieur de la partie de cadre (5') du cadre de charge (4a, 4a', 4b, 4b', 4c, 4e, 4k, 4l, 4m) en fonction de l'axe à tester du spécimen d'essai (1), puis sont resserrés sur le spécimen d'essai et **en ce qu'**une charge est ensuite introduite dans le spécimen d'essai selon un schéma d'essai prédéterminé.

10. Procédé de mise en œuvre d'un essai biaxial d'un spécimen d'essai sous la forme d'une pale de rotor ou d'un segment de pale de rotor (1) d'une éolienne avec un dispositif d'essai selon l'une quelconque des revendications précédentes, **caractérisé en ce que** deux directions de charge (20) sont d'abord déterminées par rotation de blocs de serrage à l'intérieur du cadre de charge (4a, 4a', 4b, 4b', 4c, 4e, 4k, 4l, 4m) et/ou par rotation du cadre de charge dans un cadre porteur (14, 14'), puis les fréquences de charge appropriées dans les deux directions de charge sont ensuite ajustées, selon un rapport souhaité de l'une par rapport à l'autre, grâce au réglage d'un ou de plusieurs éléments d'introduction de charge (19a, 19b, 19c) passifs, parmi lesquels au moins un agit uniquement dans une des directions de charge ou parallèlement à l'une des directions de charge, de telle manière que l'une des deux fréquences de charge appropriées est identique à l'autre fréquence de charge appropriée ou représente un multiple entier de celle-ci, dans lequel les fréquences de charge appropriées sont en particulier respectivement des fréquences, propres au système, du spécimen d'essai pour une oscillation dans la direction de charge respective.
